# EUROPEAN PATENT APPLICATION

(11) **EP 1 719 567 A1**
(43) Date of publication of application: **08.11.2006**
(21) Application number: 05425297.8
(22) Date of filing: 04.05.2005
(51) Int. Cl.: B23B 31/20, B23Q 11/10

(54) **Clamping device for machine tools**

(71) Applicant: Se.Ri.Nex S. R. L., 23848 Oggiono LC (IT)
(72) Inventor: Riva, Serafino, 23847 Molteno (LC) (IT)
(74) Representative: Marietti, Andrea

(57) **Abstract**

The present invention relates to a tool(s)-holding device capable to be associated to machine tools in order to lock a tool in its respective working position and transmit to the same tool a rotary and/or translatory motion. The device comprises a first locking element, provided with a housing in order to house the tool tang, and a second locking element capable to be coupled with the first locking element in order to lock said tang in said housing with the tool at least partially extending through an aperture obtained in the second locking element. The first locking element is further provided with one or more inside passages in order to convey near the second locking element a working fluid supplied from outside. Advantageously, the second locking element is provided with one or more through holes, being in fluid communication with the passages of the first locking element, suitable to convey the working fluid outside the tool(s)-holding device.

## Description

The present invention relates to a tool(s)-holding device for machine tools, particularly for machine tools being supplied with working fluids.

The machine tools such as, for example, drilling machines, milling machines, tapping machines, etc., are conventionally provided with tool(s)-holding devices intended to lock the (interchangeable) tools being used in the proper working position and optionally transmitting the motion to the same tools in order to carry out the processing to which they are intended. The tools can be different, such as milling cutters, drills, buffing tools, etc..

In general, the tool(s)-holding devices comprise a collet, provided with a housing suitable to house a portion of a tool, and a ring nut capable to be screwed on the collet such as to tighten the same collet against the tool portion and thus lock the tool in the proper working position. The tool(s)-holding device may further have the function of transmitting a rotary and/or translatory motion to the tool to which it is associated. For example, the tool(s)-holding devices being employed in the drilling machines transmit to the drills the rotary motion required for their respective processing.

A large number of mechanical processing requires the use of a working fluid, typically a lubricating coolant fluid, intended to be supplied at the contact area between a tool and the workpiece. The working fluid has the double function of lubricating and cooling the contact surfaces of the tool and the workpiece, such as to minimize the frictions and avoid a destructive increase in temperature for either the tool or the piece.

The working fluid, typically a water and lubricating oil emulsion, can be supplied to said contact area either through outside supplying means, for example through nozzles being oriented towards the contact area , or through the tool(s)-holding device and the same tool, which can be hollow and act itself as a fluid supplying line towards the contact area.

For example, U.S. Patent No. 5,904,451 relates to a tool(s)-holding device for hollow cutting tools, particularly for rotary tools provided with a hollow fastening tang. The device comprises a collet, intended to accommodate the tool tang, and a ring nut capable to be coupled with the collet such as to lock the tang, and thus the tool, in the proper working position. The collet is supplied with a working fluid being canalised towards the inside of the tool tang and, through the same tang, it flows either towards the tool cutting surfaces or towards the tool contact area with the workpiece. The working fluid channelling towards the tang is carried out by suitable gaps being formed between the same tang, the ring nut and the collet being coupled with each other. In order to prevent that a part of the working fluid may leak through the ring nut, being thus lost, the same ring nut and the collet are provided with sealing surfaces which, being in contact with the tool tang, provide a suitable seal against the working fluid leakage from the tool(s)-holding device.

Disadvantageously, the conventional tool(s)-holding devices being equivalent to the device according to U.S. Patent No. 5,904,451 do not allow to supply, through the collet, the working fluid to a tool which is not hollow, i.e. a tool the tang of which is not hollow but solid. The cost of the hollow tools is obviously higher than the cost of the equivalent tools having no inside channels, with obvious negative effects with regard to the machine tool processing and management costs.

Moreover, an excessive wear of the ring nut and collet sealing surfaces may cause a pressure drop in the working fluid supply circuit and, consequently, a pressure decrease of the fluid being supplied to the contact area of the tool with the work piece. This drawback may cause an insufficient lubrication and/or cooling of the tool and the breakage thereof.

Other conventional tool(s)-holding devices comprise a ring nut and a collet, being internally supplied with a working fluid, provided with notches opening to the outside, at the side surface thereof, in order to externally convey the fluid to the tool being associated to the device, bypassing the ring nut. Even if the devices of this type can work with solid tools, they do not often allow an optimum working fluid feeding to the tool-piece contact area . In fact, a part of the working fluid does not reach this area but is lost in surrounding areas for example because of the centrifugal force imparted to the fluid from the collet rotation. Furthermore, given that the fluid is not channelled or guided throughout the path up to the tool-piece contact area , the pressure thereof is limited.

On the other hand, the need has felt for a long time for providing a tool(s)-holding device, capable to be associated to both hollow and solid tools, which allows a working fluid to be conveyed at the tool-piece contact area in an effective manner in terms of flow rate, supplying direction, pressure, etc..

The object of the present invention is to provide a tool(s)-holding device which simply and effectively solves the drawbacks of the similar conventional devices, while being cost-effective.

It is a further object of the present invention to provide a tool(s)-holding device, capable to be associated to either hollow or solid tools and supplied with a working fluid, which allows the working fluid to be effectively guided towards the contact area between the tool and the workpiece even when the tool moves or rotates at high speeds.

These and other objects are achieved by the tool(s)-holding device according to the present invention of the type capable to be associated to machine tools in order to lock a tool in its respective working position and transmit to the same tool a rotary and/or translatory motion, the device comprising a first locking element, provided with a housing to house the tang of said tool, and a second locking element capable to be coupled with the first locking element in order to lock said tang in said housing, said tool at least partially extending through an aperture being obtained in said second locking element, the first locking element being further provided with one or more passages to convey near said second locking element a working fluid fed from the outside, characterized in that said second locking element is provided with one or more through holes, in fluid communication with said passages of the first locking element, in order to convey said working fluid outside the tool(s)-holding device.

Advantageously, the tool(s)-holding device according to the present invention allows a working fluid to be supplied at the tool-piece contact area , even in the case where the device rotates at high speeds, with no need for a hollow tool to be used.

The hole or the holes intended to direct the working fluid outside the device, for example a water and lubricating oil mixture, are obtained in the second locking element, preferably near the aperture through which the tool extends, such as to orientate the fluid flow towards the tool portion intended to carry out the processing. For example, in the case where the tool is a drill, the hole or the holes have the function of orientating the working fluid flow rate towards the drill free end.

Alternatively, the hole or the holes are obtained by locally extending the aperture for the tool to pass, i.e. the hole or the holes open towards this aperture besides towards the outside of the assembled tool(s)-holding device. In this embodiment the working fluid flows through the second locking element by flowing through the gaps formed by the hole, or the holes, and from the tool outer surface.

Preferably, the first locking element is a collet, for example a collet of the conventional type provided with inside passages putting in fluid communication a collet inlet section with an outlet section. The inlet section is supplied from the outside with the working fluid and the outlet section opens in the housing accommodating the tool tang. The fluid feeding can be carried out by the machine tool to which the device is associated.

According to the preferred embodiment of the present invention, the collet has a main axis and the cross sections are substantially circular. The housing in which the tool tang is housed extends in an axial direction, i.e. parallel to the tang length. The collet is provided with one or more passages at the housing for the tang in order to direct the fluid to the second locking element. The passage or the passages for the fluid preferably open in the housing for the tang.

The second locking element is preferably a ring nut capable to be screwed on the collet. The ring nut is provided with a main aperture through which the tool extends when the tool(s)-holding device is assembled, i.e. when the ring nut is screwed on the collet and the latter tightens the tool tang, thus locking it. The main aperture being obtained on the ring nut may have such sizes as to be fitted on the tool, for example by exerting on the same tool a pressure sufficient to ensure the seal of the coupling to the working fluid. The main aperture of the ring nut is set along the collet axis, in the extending direction of the tool being locked in the device.

The hole or the holes for conveying the working fluid are arranged on the ring nut near the main aperture thereof. Preferably, the ring nut is provided with two holes obtained by locally extending the main aperture, i.e. the holes open towards the aperture.

The tool(s)-holding device according to the present invention can be employed with both hollow and solid tools. The working fluid, typically a lubricating oil and water emulsion, is effectively guided by the hole or the holes present on the ring nut towards the part of the tool intended to carry out the processing, with obvious advantages with regard to the processing productivity and quality.

The pressure drops across the circuit formed by the passages inside the collet and by the holes provided on the ring nut are lower than the pressure drops accross the channels of the device according to U.S. Patent No. 5,904,451 or the devices according to the conventional solutions equivalent thereto. Therefore, the device according to the present invention allows to maximize the supplying pressure of the working fluid to the tool-workpiece contact area.

The present invention will be now described with reference to the schematic drawings which are annexed by way of illustrative examples. Particularly:
Fig. 1 is a sectional view of a first component of a device according to the present invention;
- Fig. 2 is a plan view of the first component shown in Fig.1;
- Fig. 3 is a sectional, schematic view of a device according to the present invention fastened to the tang of a tool.

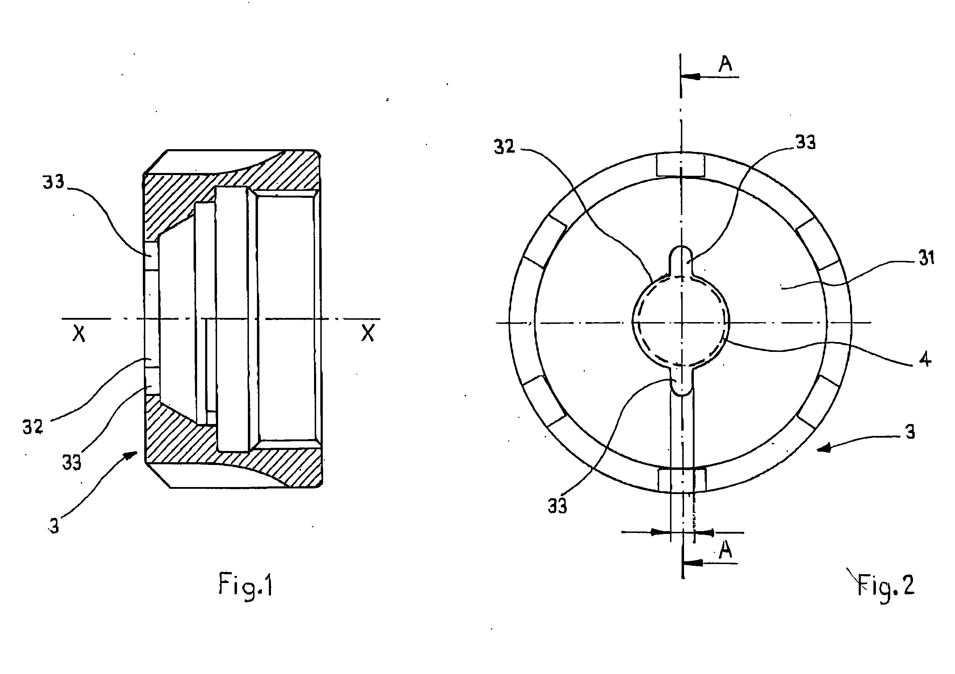

With reference to Figs. 1-3, the device 1 according to the present invention comprises a first locking element 2 and a second locking element 3. The first locking element 2 is provided with a housing 21, extending along X-X axis, suitable to accommodate the tang 4 of a tool, for example a drill or a milling cutter. Either the tang 4 or another tool portion can be inserted into the housing 21 through the outlet section 22.

The first locking element 2 is supplied with a working fluid the nature of which depends on the type of processing to be carried out. Typically, the working fluid is a lubricating coolant fluid. The fluid feeding is carried out from outside the element 2, through the inlet section 23. For example, the fluid may be supplied to the section 23 from the machine tool to which the tool(s)-holding device 1 is associated.

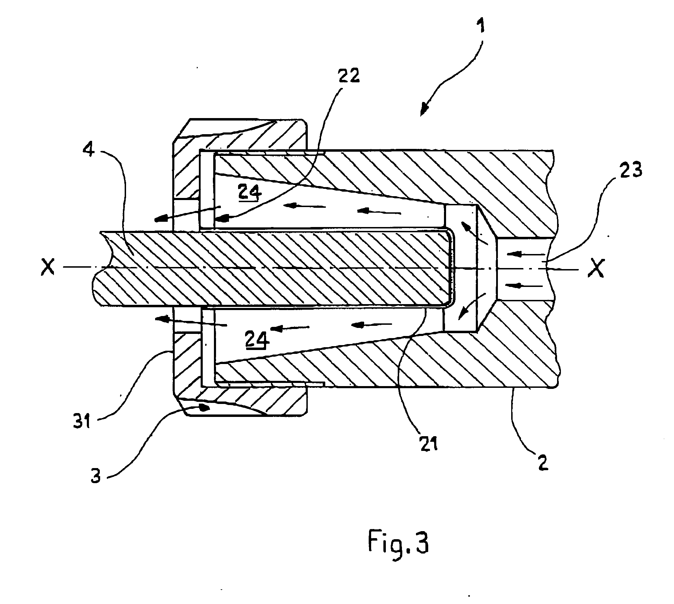

The locking element 2 is provided with at least one passage 24 having the function of putting in fluid communication the inlet section 23 with the outlet section 22, such as to convey the working fluid through the same element 2. In the embodiment schematically shown in Fig. 3, the passages 24 are two and extend along X-X axis behind the tang 4. Fig. 3 shows a cross section of the assembled device 1 in which the passages 24 are highlighted. It will be understood by those skilled in the art that the housing 21 of the locking element 2 is defined by surfaces of the same element 2 which rest on the tang 4 and that the passages 24 are obtained in these surfaces.

The arrows shown in Fig.3 show the path followed by the working fluid being supplied to the locking element 2 and supplied from the passages 24 through the same element 2.

The second locking element 3 can be coupled with the first locking element 2 at the outlet section 22 thereof. The first locking element 2 is manufactured such that, when the second locking element 3 is coupled therewith, the surfaces defining the housing 21 move towards X-X axis in order to compress the tang 4 and thus lock it in the corresponding working position.

Preferably, the first locking element 2 is a collet, for example a tool(s)-holding collet capable to be supplied with a working fluid, and the second locking element 3 is a ring nut capable to be coupled with the collet 2 in order to tighten the collet 2 on the tang 4.

Figs. 1 and 2 show the ring nut 3 in a longitudinal section (on a different plane relative to the section shown in Fig. 3) and on a plane, respectively. As shown in Fig. 3, when the ring nut 3 is coupled with the collet 2 (for example screwed on the collet 2), the surface 31 has the function of stopping the outlet section 22 of the collet 2. Through the surface 31 a main aperture 32 is obtained. When the ring nut 3 is screwed to the collet 2, the tool 4 extends through the aperture 32, preferably this aperture fits on the tang 4. The coupling between the aperture 32 and the tang 4 may be fluid-tight in order to avoid that the working fluid may flow between the edges of the aperture 32 and the tang 4.

Advantageously, the ring nut 3 is provided with one or more holes 33 having the function of fluid communicating the passages 24 of the collet 2 with the outside of the assembled device 1 (Fig. 3). When the ring nut 3 is coupled with the collet 2, the holes 33 are configured as apertures towards the outside for the passages 24. Preferably, the holes 33 are two and are obtained through the surface 31 such as to guide the working fluid towards X-X-axis, at the tool portion intended to carry out the processing on a piece, i.e. the tool portion which may have to be cooled and/or lubricated. For example, the holes 33 may have a nozzle configuration.

The holes 33 can be set around the aperture 32 on the surface 31. Preferably, as shown in Fig. 2, the holes 33 communicate with the aperture 32, i.e. open towards the aperture 32. When the tang 4 (indicated with a dashed line) is inserted into the aperture 32, a part of the side surface of the holes 33 is limited by the outer surface of the tang 4. For clarity reasons, in Fig. 2 the gap between the tang 4 and the edge of the aperture 32 is shown enlarged. As a matter of fact, the tang-aperture coupling can be fluid-tight.

The working fluid fed to the device 1 is guided by the passages 24 towards the corresponding holes 33 and, through the same holes, towards at least one tool portion extending from the surface 31 of the ring nut 3.

Advantageously, the device 1 according to the present invention allows to effectively control the flow direction of the working fluid towards one or more tool portions, while minimizing the pressure drops.

The device 1 is further easy to be manufactured and cost-effective and can be employed in association with conventional tools of various type (drills, milling cutters, etc.) and with the most common machine tools.

A further advantage of the device 1 lies in that the holes 33, being set such as shown in Figs. 1-3, allow the working fluid to be conveyed towards the tool X-X-axis. In the case where the device 1 rotates around X-X-axis, the flow direction of the working fluid is affected by the centrifugal force to a lesser extent relative to what may occur in the case of the conventional devices, with obvious advantages with regard to the effectiveness of the lubrication and/or the cooling of the tool or the worked piece.

## Claims

1. A tool(s)-holding device (1) of the type capable to be associated to machine tools in order to lock a tool in its respective working position and transmit to the same tool a rotary and/or translatory motion, the device (1) comprising a first locking element (2), provided with a housing (21) in order to house the tang (4) of said tool, and a second locking element (3) capable to be coupled with the first locking element (2) in order to lock said tang (4) in said housing (21), said tool at least partially extending through an aperture (32) being obtained in said second locking element (3), the first locking element (2) being further provided with one or more passages (24) in order to convey near said second locking element (3) a working fluid supplied from outside,
**characterized in that**
said second locking element (3) is provided with one or more through holes (33), being in fluid communication with said passages (24) of the first locking element, in order to convey said working fluid outside the tool(s)-holding device (1).

2. The device according to claim 1, **characterized in that** said one or more holes (33) are provided near said aperture (32) of the second locking element (3).

3. The device according to claim 1 or claim 2, **characterized in that** said one or more holes (33) open in said aperture (32).

4. The device according to claim 3, **characterized in that** the working fluid being supplied to said second locking element (3) flows through said one or more holes (33) around the outer surface of said tool.

5. The device according to any one of the preceding claims, **characterized in that** said one or more holes (33) are nozzles conveying said working fluid towards the tool portion intended to carry out a processing.

6. The device according to any one of the preceding claims, **characterized in that** said first locking element (2) is a collet and said second locking element (3) is a ring nut capable to be screwed on said collet

7. The device according to claim 6, **characterized in that** said collet (2) has a substantially circular cross section and said housing (21) and said one or more passages (24) axially extend inside the collet (2) from a feeding section (23) of said working fluid up to an outlet section (22).

8. The device according to claim 7, **characterized in that** said ring nut (3) stops said outlet section (22) of said collet (2), said tool axially extending through said aperture (32) obtained on the surface (31) thereof, said working fluid flowing through said one or more holes (33) arranged on said surface (31).

9. A machine tool, provided with a supply system for a working fluid, **characterized in that** it comprises at least one tool(s)-holding device (1) according to any previous claims 1 to 8.

10. A use of a tool(s)-holding device (1) according to any of the preceding claims 1-8 in order to arrange one or more tools on a machine tool.
